# EUROPÄISCHE PATENTSCHRIFT

(11) **EP 1 036 882 B1**
(45) Veröffentlichungstag und Bekanntmachung des Hinweises auf die Patenterteilung: **05.03.2003**
(21) Anmeldenummer: 99105296.0
(22) Anmeldetag: 15.03.1999
(51) Int. Cl.: E01C 5/00

(54) **Kunststein für Pflasterzwecke**
Artificial stone for pavings
Pierre artificielle pour revêtements

(43) Veröffentlichungstag der Anmeldung: 20.09.2000
(73) Patentinhaber: Kombilith GmbH Entwicklung und Verwertung, 40213 Düsseldorf (DE)
(72) Erfinder: Schröder, Detlef, Dipl.-Ing. Blenia Design S.A.G.L, 6714 Semione Ticino (CH)
(74) Vertreter: Patentanwälte Hauck, Graalfs, Wehnert, Döring, Siemons, Schildberg

(56) Entgegenhaltungen:
- DE-A- 2 452 475
- DE-A- 4 446 427
- DE-U- 29 721 360
- US-A- 5 466 089

## Beschreibung

Die vorliegende Erfindung betrifft einen Kunststein für Pflasterzwecke mit den Merkmalen des Oberbegriffs des Patentanspruchs 1.

Derartige Abstandshalter dienten aus Sicht der Hersteller ursprünglich dem Zweck, Steinkanten ohne Fase beim Transport gegen Abplatzungen zu schützen. Diese Abstandshalter hatten daher eine geringere Tiefe als die Soll-Fugenbreite.

In der Praxis wurde aus derartigen Abstandshaltern jedoch eine willkommene Verlegehilfe. Dabei wurde mißbräuchlich der nur für den Transport bestimmte Abstandshalter zu einem Abstandshalter beim Verlegen. Aus Sicht des Pflasterverlegers sind die Abstandshalter Hilfsmittel geworden, die ohne zusätzlichen Arbeitsaufwand die Erreichung annähernd gleichmäßiger Fugenbreiten ermöglichen. Wenn man den Arbeitsaufwand bedenkt, den handwerklich einwandfreies Pflasterverlegen mit Soll-Fugenbreiten erfordert, kann man mit Sicherheit davon ausgehen, daß auch in Zukunft die Tiefe der Abstandshalter gleich Fugenbreite sein wird. Das hat jedoch zur Folge, daß zu geringe Fugenbreiten eingehalten werden und eine Verlegung Stein an Stein (benachbarte Steine stehen unmittelbar in Kontakt) erfolgt, wodurch das Pflastergefüge nicht mehr die notwendige Elastizität erhält, die nur über ordnungsgemäß verfüllte Fugen erreicht wird, wenn gleichzeitig der direkte Kontakt Stein an Stein vermieden wird.

Gleiche Überlegungen treffen auf Kunststeine zu, die mit vorstehenden Verbundabschnitten an den Seitenflächen versehen sind, die mit vorstehenden Verbundabschnitten an den Seitenflächen eines benachbarten Steines zusammenwirken. Diese Verbundabschnitte besitzen beispielsweise die Form von Zähnen und hieran angepaßten Zahnlücken. Beim Aneinandersetzen von mehreren Steinen sorgen sie durch ihren Eingriff für einen festen Verband, wobei beim Aneinandersetzen der Steine hierzwischen eine Fuge ausgebildet wird. Eine derartige Fuge hat insbesondere den Sinn, eine Möglichkeit für die Versickerung von Regenwasser zu schaffen. Auch beim Verlegen von derartigen Steinen werden normalerweise die Verbundabschnitte von benachbarten Steinen eng aneinandergesetzt, so daß die Verbundabschnitte direkten Kontakt miteinander haben. Das hat zur Folge, daß zwischen den Verbundabschnitten keine Fuge mehr vorhanden ist, die für die notwendige Elastizität des Pflastergefüges sorgt.

Aus der DE 44 46 427 A1 ist ein Pflasterstein aus Beton mit einem die Nutzfläche bildenden Hauptkörper, der mindestens eine Noppenanformung am Hauptkörper aufweist, die mit mindestens einem am Hauptkörper angrenzenden Balken zum Halten einer großen Fuge dieses Hauptkörpers gegenüber dem Hauptkörper eines im Verband benachbarten Pflastersteines aus Beton oder mehreren derselben versehen ist, bekannt, bei dem bei mindestens einer Noppenanformung an dem Hauptkörper mindestens ein Balken seinerseits mit mindestens einem Überstand zum Halten einer anderen großen Fuge zwischen den Hauptkörpern benachbarter Pflastersteine versehen ist. Dieser bekannte Pflasterstein weist keinen vorstehenden Verbundabschnitt an einer Seitenfläche auf, der mit einem vorstehenden Verbundabschnitt eines benachbarten Steines zusammenwirkt.

Aus der DE 297 21 360 U ist ein Formstein bekannt, der auf seinen Seitenflächen vorstehende Verbundabschnitte aufweist, die mit vorstehenden Verbundabschnitten eines benachbarten Steines zusammenwirken. Diese vorstehenden Verbundabschnitte sind im Horizontalschnitt dreieckförmig ausgebildet und weisen eine lineare Vorderkante auf, die gegen die Seitenfläche des benachbarten Steines stößt.

Der Erfindung liegt die Aufgabe zugrunde, einen Kunststein der im Oberbegriff des Patentanspruchs 1 wiedergegebenen Art zu schaffen, mit dem in der Gebrauchsphase (verlegter Zustand) bei Einhaltung des Soll- Fugenmaßes ein direkter Kontakt mit dem Nachbarstein weitgehend verhindert werden kann.

Diese Aufgabe wird bei einem Kunststein der angegebenen Art durch die kennzeichnenden Merkmale des Patentanspruchs 1 gelöst.

Beim Verlegen wirkt somit der erfindungsgemäß ausgebildete Abstandshalter als "echter" Abstandshalter, der für eine Einhaltung des Soll-Fugenabstandes sorgt. Der Stein kann daher gezielt so verlegt werden, daß sein Abstandshalter gegen den benachbarten Stein stößt (gegen eine Seitenfläche, einen anderen Abstandshalter, einen Verbundabschnitt etc.). Damit stellt der Abstandshalter eine wesentliche Verlegehilfe dar, da der Arbeitsaufwand zum exakten Verlegen unter Einhaltung des Soll-Fugenabstandes verringert wird.

In der Gebrauchsphase, d.h. im verlegten Zustand des Steines, wird jedoch durch das Abrütteln des verlegten Pflasters die Kontaktfläche bzw. der Kontaktabschnitt des Abstandshalters zerstört (abgebrochen), so daß nach dem Abrütteln kein direkter Kontakt mehr zwischen dem Abstandshalter und dem benachbarten Stein vorhanden ist. Damit wird auch in diesem Bereich eine Fuge (wenn auch ggf. mit geringerer Breite) ausgebildet, die verfüllt wird, so daß das Pflastergefüge die gewünschte Elastizität erhält.

Die Zerstörung der Kontaktfläche bzw. des Kontaktabschnittes des Abstandshalters beim Abrütteln des verlegten Pflasters wird erreicht, indem die Kontaktfläche bzw. der Kontaktabschnitt entsprechend klein ausgebildet wird. Exakte Größenangaben lassen sich hier nicht festlegen und hängen von den jeweiligen Gegebenheiten ab. Sie sind unter Umständen empirisch über Versuche zu ermitteln. Wichtig ist jedenfalls, daß bei üblichen Vibrationskräften und Vibrationszeiten, die beim Pflasterverlegen Anwendung finden, ein Reißen, Abbrechen, Lösen etc. des Kontaktabschnittes bzw. ein Zerstören der Kontaktfläche des Abstandshalters erreicht werden soll.

Es ist augenscheinlich, daß hier nicht unbedingt die gesamte Kontaktfläche bzw. der gesamte Kontaktabschnitt zerstört werden muß. Selbst wenn noch Kontaktbrücken bestehen bleiben, ist der erfindungsgemäße Effekt erreicht, denn hierdurch wird die Elastizität des verlegten Pflasters nach ordnungsgemäßer Fugenverfüllung wesentlich gesteigert.

Bei dem erfindungsgemäß ausgebildeten Kunststein sorgt somit der Abstandshalter beim Verlegen für den Soll-Fugenabstand und verhindert beim Verlegen den direkten Kontakt Stein auf Stein, Stein auf Verbundabschnitt und Verbundabschnitt auf Verbundabschnitt, abgesehen von den direkten Kontaktflächen der Abstandshalter, die beim Abrütteln des Pflasters zerstört werden oder abbrechen. Der Abstandshalter wird daher in der Gebrauchsphase des Pflasters nicht mehr wirksam. Nach Zerstörung der Kontaktfläche der Abstandshalter wird der Abstand zwischen den Steinen durch das Fugenfüllmaterial gesichert.

Wie erwähnt, muß die Kontaktfläche des Abstandshalters klein ausgebildet sein, um eine Zerstörung beim Abrütteln des verlegten Pflasters zu ermöglichen. Dies wird bei einer Ausführungsform erreicht, bei der der Abstandshalter eine annähernd punktförmige Kontaktfläche besitzt. Eine weitere Ausführungsform zeichnet sich dadurch aus, daß der Abstandshalter eine annähernd lineare Kontaktfläche besitzt, beispielsweise in der Form eines Grates.

Eine spezielle Ausführungsform der Erfindung zeichnet sich dadurch aus, daß der Abstandshalter in der Form einer Aufwölbung an der Seitenfläche ausgebildet ist. Die Aufwölbung ist zweckmäßigerweise pyramidenförmig, halb- oder viertelkugelig. Diese Ausgestaltungen sichern eine annährend punktförmige Kontaktfläche mit dem Nachbarstein. Eine konische Ausgestaltung ist ebenfalls möglich.

Eine weitere Ausführungsform der Erfindung zeichnet sich dadurch aus, daß der Abstandshalter als horizontaler Grat an der Seitenfläche ausgebildet ist. Dieser Grat ist vorzugsweise an der Unterkante der Seitenfläche ausgebildet. Bei einer weiteren Ausführungsform ist der Abstandshalter als vertikaler Grat an der Seitenfläche ausgebildet. Hierbei stoßen die horizontalen Grate an den Seitenwänden des Steines annähernd punktuell auf vertikale Ausformungen der Seitenwände angrenzender Steine, nämlich Verbundabschnitte dieser Steine. Wie erwähnt, wird hierdurch ein annähernd punktueller Kontakt sichergestellt.

Der Kunststein ist mit mindestens einem vorstehenden Verbundabschnitt an der Seitenfläche versehen ist, der mit einem vorstehenden Verbundabschnitt eines benachbarten Steines zusammenwirkt, um eine Verzahnung herzustellen. Hierbei ist der Abstandshalter bei einer ersten Ausführungsform in dem Bereich der Seitenfläche angeordnet, mit dem der Verbundabschnitt des benachbarten Steines in Kontakt tritt. Mit anderen Worten, hierbei wird verhindert, daß ein Verbundabschnitt direkt gegen die Seitenfläche des Nachbarsteines stößt und somit einen unerwünschten Kontakt Stein an Stein bildet. Statt dessen stößt der Verbundabschnitt mit seiner Spitze gegen den Abstandshalter, der beispielsweise in der Form eines horizontalen Grates ausgebildet ist, so daß der gewünschte Fugenabstand sichergestellt wird. Der Abstandshalter ist dabei vorzugsweise benachbart zum Verbundabschnitt angeordnet, da in diesem Bereich die Seitenfläche vom Verbundabschnitt des Nachbarsteines kontaktiert wird.

Sind auf einer Seitenfläche zwei benachbarte Verbundabschnitte angeordnet, beispielsweise in der Form von Zähnen, die zwischen sich eine Zahnlücke bilden, so ist der Abstandshalter zweckmäßigerweise zwischen den beiden benachbarten Verbundabschnitten, d.h. in der Zahnlücke, angeordnet, da in diesem Bereich ein Verbundabschnitt (Zahn) des Nachbarsteines eingreift. Diese Ausführungsform hat den besonderen Vorteil, daß der Abstandshalter so geschützt am Stein angeordnet ist, daß er während sämtlicher Transportphasen in seinen für die spätere Funktion wichtigen Teilen nicht zerstört wird.

Bei einer weiteren Ausführungsform ist erfindungsgemäß der Abstandshalter auf dem Vorderabschnitt eines Verbundabschnittes angeordnet, beispielsweise in der Form eines vertikalen Grates. Diese Ausführungsform bringt jedoch insofern gewisse Probleme mit sich, als daß die Abstandshalter bereits beim Transport bzw. Abklammern der Steine leicht zerstört werden können.

Generell ist noch anzumerken, daß der Abstandshalter vorzugsweise nur im unteren Bereich der Seitenfläche angeordnet ist, um eine durchgehende Verfüllung mit Fugenmaterial im oberen Bereich der Seitenfläche zu ermöglichen. Auch die Verbundabschnitte, wenn solche vorgesehen sind, sind vorzugsweise nur im unteren Bereich der Seitenfläche angeordnet, um diesen Effekt zu ermöglichen. Bei einem Anblick von oben auf das verlegte Pflaster erhält der Betrachter daher den Eindruck einheitlicher durchlaufender Fugen.

Die Erfindung wird nachfolgend anhand von Ausführungsbeispielen in Verbindung mit der Zeichnung im einzelnen erläutert. Es zeigen:
- Figur 1: eine räumliche Ansicht eines Kunststeines, dessen Seitenflächen mit Verbundabschnitten und einem Abstandshalter in der Form eines horizontalen Grates versehen sind;
- Figur 2: einen Vertikalschnitt durch den Kunststein der Figur 1 und zwei Detailansichten des Abstandshalters;
- Figur 3: eine räumliche Ansicht eines Kunststeines mit Verbundabschnitten auf den Seitenflächen, wobei bestimmte Verbundabschnitte mit Abstandshaltern in der Form eines vertikalen Grates versehen sind; und
- Figur 4: eine Ansicht wie Figur 3, bei der Abstandshalter in der Form von vertikalen Graten zwischen benachbarten Verbundabschnitten angeordnet sind.

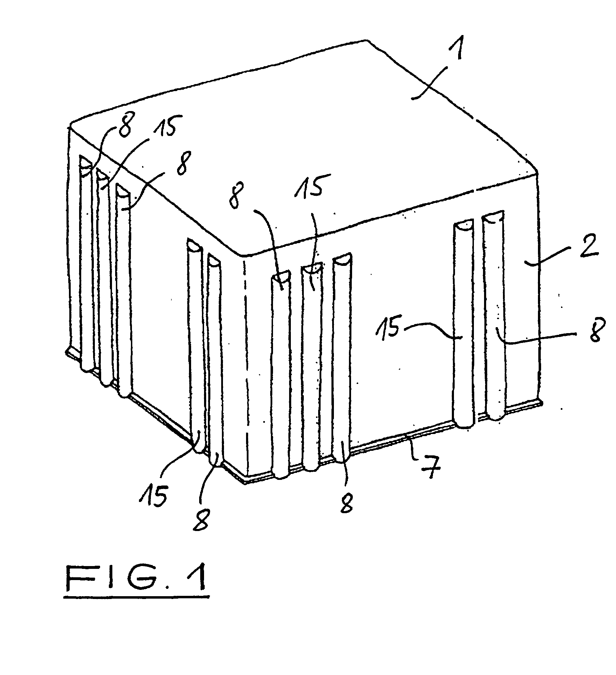

Figur 1 zeigt eine Ausführungsform eines Kunststeines 1, auf dessen Seitenflächen 2 Verbundabschnitte 8 und 15 angeordnet sind, die mit Verbundabschnitten von Nachbarsteinen zusammenwirken, um eine Verzahnung auszubilden. Die Verbundabschnitte 8 und 15 sind dabei halbzylindrisch ausgebildet.

Der Kunststein 1 besitzt einen umlaufenden Abstandshalter 7, der in der Form eines horizontalen Grates an der Unterkante der Seitenflächen 2 angeordnet ist. Bei dieser Ausführungsform treten Verbundabschnitte der Nachbarsteine beim Verlegen mit dem Abstandshalter 7 in Kontakt, um das exakte Fugenmaß festzulegen. Durch das Abrütteln des verlegten Pflasters werden die entsprechenden Kontaktabschnitte bzw. Kontaktflächen zerstört, so daß danach kein Kontakt Stein an Stein mehr vorhanden ist.

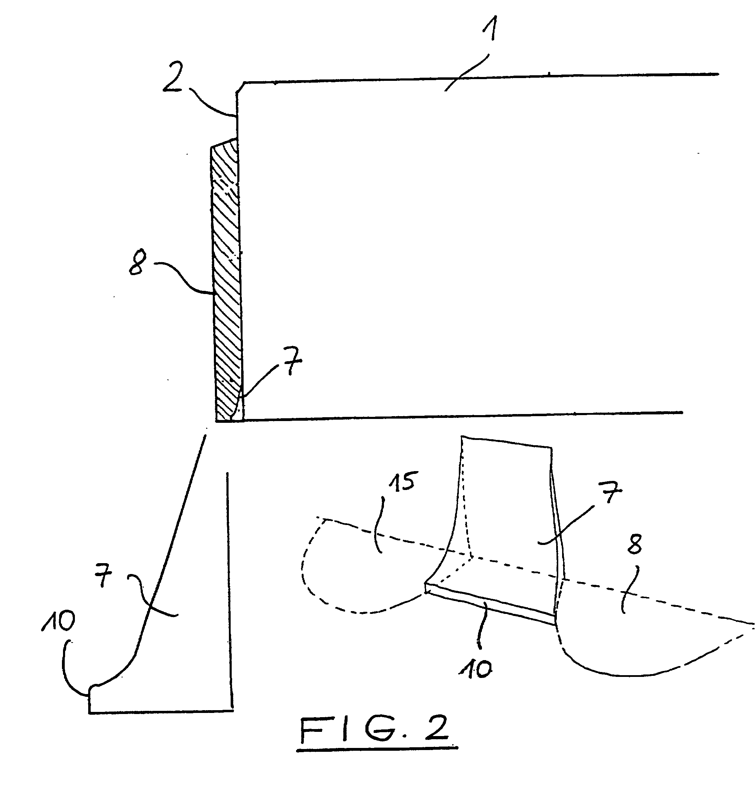

Figur 2 zeigt in der oberen Ansicht den Kunststein der Figur 1 im Vertikalschnitt. Man erkennt deutlich den Abstandshalter 7 in der Form eines horizontalen Grates, der im Bereich der Unterkante der Seitenfläche 2 angeordnet ist. Der Grat hat eine schmale Kontakfläche 10 und läuft schräg nach oben aus.

In den beiden unteren Ansichten sind Details des Abstandshalters dargestellt. Die rechte Ansicht zeigt deutlich, daß der Abstandshalter 7 zwischen zwei halbzylindrisch ausgebildeten Verbundabschnitten 8 angeordnet ist. Die linke Ansicht zeigt den Abstandshalter im vergrößerten Schnitt.

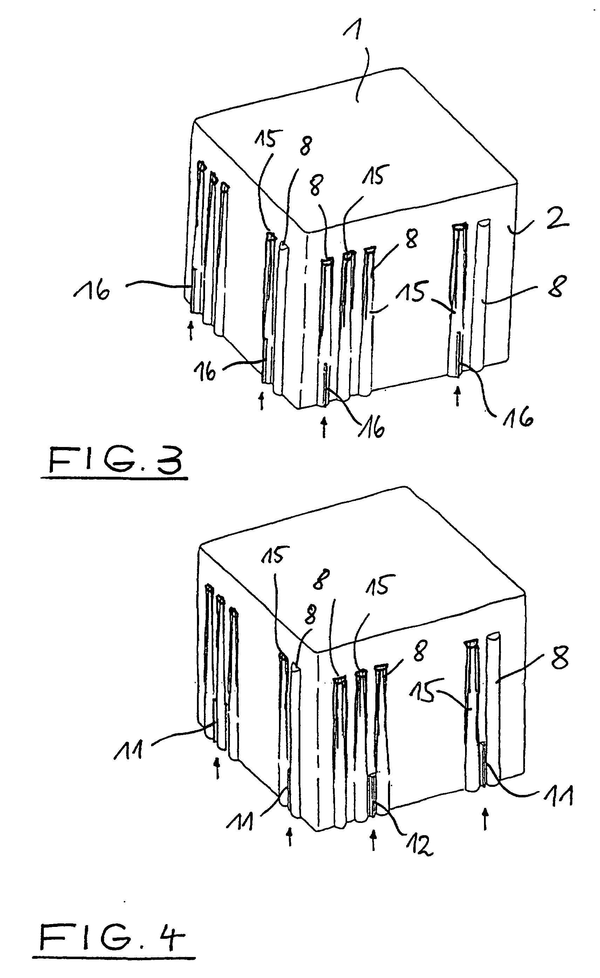

Figur 3 zeigt eine weitere Ausführungsform eines Kunststeines 1, der ebenfalls auf seinen Seitenflächen 2 mit Verbundabschnitten 8 und 15 versehen ist wie bei der Ausführungsform der Figur 1. Hierbei sind Abstandshalter 16 in der Form von vertikalen Graten auf dem unteren Bereich der halbzylindrischen Abschnitte der Verbundabschnitte 15 angeordnet. Diese Abstandshalter 16 wirken mit den Seitenflächen der Nachbarsteine zusammen (Verlegephase), werden jedoch im verlegten Zustand beim Abrütteln zerstört.

Figur 4 zeigt eine Ausführungsform, bei der Abstandshalter 11 ebenfalls in der Form von vertikalen Graten mit vorderen Kontaktflächen 12 ausgebildet sind. Diese Abstandshalter 11 sind hierbei jedoch zwischen den benachbarten Verbundabschnitten 8 und 15 angeordnet und wirken jeweils mit einem Verbundabschnitt der verlegten Nachbarsteine zusammen. Der Effekt ist der gleiche wie bei den anderen Ausführungsformen.

## Patentansprüche

1. Kunststein (1) für Pflasterzwecke mit senkrecht oder schräg zur Verlegeebene gerichteten Seitenflächen (2) mit mindestens einem vorstehenden Verbundabschnitt (8,15) an der Seitenfläche, der mit einem vorstehenden Verbundabschnitt eines benachbarten Steines zusammenwirkt, **dadurch gekennzeichnet, daß** in dem Bereich der Seitenfläche (2), mit dem der Verbundabschnitt des benachbarten Steines in Kontakt tritt, oder auf dem Vorderabschnitt eines Verbundabschnittes (15) ein Abstandshalter (7,11,12,16) angeordnet ist, dessen Fläche zum Kontaktieren eines benachbarten Steines so klein ausgebildet ist, daß sie zwar beim Verlegen die Idealposition des Steines mit dem Soll-Fugenabstand sichert, jedoch beim Abrütteln des verlegten Pflasters zumindest teilweise zerstört wird.

2. Kunststein nach Anspruch 1, **dadurch gekennzeichnet, daß** der Abstandshalter eine annähernd punktförmige Kontaktfläche besitzt.

3. Kunststein nach Anspruch 1, **dadurch gekennzeichnet, daß** der Abstandshalter (7, 11, 16) eine annähernd lineare Kontaktfläche (10, 12) besitzt.

4. Kunststein nach einem der vorangehenden Ansprüche, **dadurch gekennzeichnet, daß** der Abstandshalter in der Form einer Aufwölbung an der Seitenfläche ausgebildet ist.

5. Kunststein nach Anspruch 4, **dadurch gekennzeichnet, daß** die Aufwölbung pyramidenförmig, halboder viertelkugelig ist.

6. Kunststein nach einem der Ansprüche 1 oder 3, **dadurch gekennzeichnet, daß** der Abstandshalter (7) als horizontaler Grat an der Seitenfläche (2) ausgebildet ist.

7. Kunststein nach Anspruch 6, **dadurch gekennzeichnet, daß** der horizontale Grat an der Unterkante der Seitenfläche (2) ausgebildet ist.

8. Kunststein nach Anspruch 1 oder 3, **dadurch gekennzeichnet, daß** der Abstandshalter (11) als vertikaler Grat an der Seitenfläche (2) ausgebildet ist.

9. Kunststein nach einem der vorangehenden Ansprüche, **dadurch gekennzeichnet, daß** der Abstandshalter (7, 11) benachbart zum Verbundabschnitt (8, 15) angeordnet ist.

10. Kunststein nach einem der vorangehenden Ansprüche, **dadurch gekennzeichnet, daß** der Abstandshalter (7, 11) zwischen zwei benachbarten Verbundabschnitten (8, 15) angeordnet ist.

11. Kunststein nach einem der vorangehenden Ansprüche, **dadurch gekennzeichnet, daß** der Abstandshalter (7, 11) nur im unteren Bereich der Seitenfläche (2) angeordnet ist.

## Claims

1. An artificial stone for pavings, said stone comprising lateral surfaces (2) perpendicularly or obliquely directed with respect to the laying-plane of the paving and having at least one projecting interconnecting section (8, 15) at the lateral surface which cooperates with a projecting interconnecting section of an adjacent stone, **characterized in that** a spacer (7, 11, 12, 13) is disposed in a range of the lateral surface (2) which is contacted by the interconnecting section of the adjacent stone or on the front portion of an interconnecting section (15), the surface of the spacer for contacting an adjacent stone being formed so small that it assures the ideal position of the stone with the target joint distance during the laying of the paving, however, is at least partly destroyed during the jarring of the laid paving.

2. The artificial stone according to claim 1, **characterized in that** the spacer has an approximately point-like contact surface.

3. The artificial stone according to claim 1, **characterized in that** the spacer (7, 11, 16) has an approximately linear contact surface (10, 12).

4. The artificial stone according to one of the preceding claims, **characterized in that** the spacer has the form of a bulging at the lateral surface.

5. The artificial stone according to claim 4, **characterized in that** the bulging has the form of a pyramid, a half sphere or a quarter sphere.

6. The artificial stone according to one of the claims 1 or 3, **characterized in that** the spacer (7) is formed as horizontal ridge at the lateral surface (2).

7. The artificial stone according to claim 6, **characterized in that** the horizontal ridge is formed at the lower edge of the lateral surface (2).

8. The artificial stone according to claim 1 or 3, **characterized in that** the spacer (11) is formed as vertical ridge at the lateral surface (2).

9. The artificial stone according to one of the preceding claims, **characterized in that** the spacer (7, 11) is disposed adjacent to the interconnecting section (8, 15).

10. The artificial stone according to one of the preceding claims, **characterized in that** the spacer (7, 11) is disposed between two adjacent interconnecting sections (8, 15).

11. The artificial stone according to one of the preceding claims, **characterized in that** the spacer (7, 11) is disposed only in the lower region of the lateral surface (2).

## Revendications

1. Pierre artificielle (1) pour revêtements comprenant des surfaces latérales (2) orientées perpendiculairement ou obliquement par rapport au plan de pose, au moins une section d'interconnexion (8, 15) faisant saillie sur la surface latérale, qui coopère avec une section d'interconnexion faisant saillie d'une pierre voisine, **caractérisée en ce que** dans la région de la surface latérale (2) avec laquelle la section d'interconnexion de la pierre voisine entre en contact, ou sur la section avant d'une section d'interconnexion (15), est disposée une pièce d'écartement (7, 11, 12, 16) dont la surface destinée à entrer en contact avec une pierre voisine est si petite qu'elle assure en fait lors de la pose la position idéale de la pierre avec le joint prescrit mais est au moins en partie détruite lorsqu'on fait tomber le plâtre posé.

2. Pierre artificielle selon la revendication 1, **caractérisée en ce que** la pièce d'écartement comprend une surface de contact approximativement en forme de points.

3. Pierre artificielle selon la revendication 1, **caractérisée en ce que** la pièce d'écartement (7, 11, 16) comprend une surface de contact (10, 12) approximativement linéaire.

4. Pierre artificielle selon une des revendications précédentes, **caractérisée en ce que** la pièce d'écartement est conformée comme un renflement sur la surface latérale.

5. Pierre artificielle selon la revendication 4, **caractérisée en ce que** le renflement a la forme d'une pyramide, d'une demi-sphère ou d'un quart de sphère.

6. Pierre artificielle selon une des revendications 1 ou 3, **caractérisée en ce que** la pièce d'écartement (7) est conformée comme une arête horizontale sur la surface latérale (2).

7. Pierre artificielle selon la revendication 6, **caractérisée en ce que** l'arête horizontale est conformée sur le bord inférieur de la surface latérale (2).

8. Pierre artificielle selon une des revendications 1 ou 3, **caractérisée en ce que** la pièce d'écartement (11) est conformée comme une arête verticale sur la surface latérale (2).

9. Pierre artificielle selon une des revendications précédentes, **caractérisée en ce que** la pièce d'écartement (7, 11) est disposée de manière contiguë à la section d'interconnexion (8, 15).

10. Pierre artificielle selon une des revendications précédentes, **caractérisée en ce que** la pièce d'écartement (7, 11) est disposée entre deux sections d'interconnexion (87, 15) contiguës.

11. Pierre artificielle selon une des revendications précédentes, **caractérisée en ce que** la pièce d'écartement (7, 11) est disposée dans la région inférieure de la surface latérale (2).
